# EUROPEAN PATENT APPLICATION

(11) **EP 4 383 412 A2**
(43) Date of publication of application: **12.06.2024**
(21) Application number: 23212051.9
(22) Date of filing: 24.11.2023
(51) Int. Cl.: H01M 50/103, H01M 50/15, H01M 50/176, H01M 50/209, H01M 50/507, H01M 50/516, H01M 50/55, H01M 50/553, H01M 50/567

(54) **BATTERY CELL AND BATTERY PACK INCLUDING THE SAME**

(30) Priority: 05.12.2022 KR 20220168054
(71) Applicant: Samsung SDI Co., Ltd., Yongin-si, Gyeonggi-do 17084 (KR)
(72) Inventor: Kim, Myung Chul, 17084 Yongin-si, Gyeonggi-do, (KR)
(74) Representative: Gulde & Partner

(57) **Abstract**

A battery cell (10) including an electrode assembly and a cap assembly (12). The cap assembly (12) includes a terminal plate (122, 124, 222, 224), a negative electrode terminal, and a positive electrode terminal. The negative electrode terminal and the positive electrode terminal respectively include a rivet terminal (122a, 124a, 222a, 224a) electrically connecting the terminal plate (122, 124, 222, 224) and the electrode assembly, and the terminal plate (122, 124, 222, 224) has a guide line (L1, L2, L3) on a plate surface thereof and passing through a center of the rivet terminal (122a, 124a, 222a, 224a).

## Description

### BACKGROUND

### 1. Field

Aspects of embodiments of the present invention relate to a battery cell and a battery pack including the same.

### 2. Description of the Related Art

Generally, a battery pack includes a plurality of battery cells, bus bars electrically connecting the battery cells to each other and to the outside, and a circuit board that is electrically connected to the bus bars and has various circuits and components mounted thereon. Each battery cell includes a negative electrode terminal and a positive electrode terminal. The bus bars may be electrically connected to the terminals of the battery cells by laser welding. In this case, to ensure welding quality after welding, a partially open portion should be present between the bus bar and the terminal before welding. This allows for the welding quality to be checked by using a probe for measuring low resistance.

When a rivet terminal is used as a terminal of a battery cell, a welding position should be accurate so that the rivet terminal is not affected during laser welding. However, in a process of stacking a plurality of cells, it is difficult for a position of a cell terminal to maintain an accurate distance (or an accurate position) due to accumulated tolerances and the like. In addition, because the rivet terminal is covered by the bus bar during welding, it is difficult to check welding quality because an exact position of the rivet terminal is not known.

The above information disclosed in this background section is for enhancement of understanding of the background of the present invention, and therefore, it may contain information that does not constitute the related (or prior) art.

### SUMMARY

Embodiments of the present invention provide a battery cell in which a center of a rivet terminal is easily identifiable, and a battery pack including the battery cell.

A battery cell, according to an embodiment of the present invention, includes an electrode assembly and a cap assembly. The cap assembly includes: a terminal plate; a negative electrode terminal; and a positive electrode terminal. The negative electrode terminal and the positive electrode terminal respectively include a rivet terminal electrically connecting the terminal plate and the electrode assembly, and each of the terminal plates has a guide line on a plate surface thereof and passing through a center of the rivet terminal.

The guide line may be parallel to a length direction of the cap assembly.

The guide line may be perpendicular to a length direction of the cap assembly.

The guide line may include: a first guide line parallel to a length direction of the cap assembly; and a second guide line perpendicular to the length direction of the cap assembly.

The guide line may further include a plurality of third guide lines spaced apart from the first guide line and the second guide line.

The first to third guide lines may be spaced apart from each other at equal intervals.

The guide line may be formed through laser marking or mechanical marking to have a preferred depth of about 0.01 mm or less.

A battery pack, according to an embodiment of the present invention, includes: a plurality of battery cells; a plurality of bus bars; and a cell frame supporting the battery cells. Each of the battery cells includes: a cap assembly including a terminal plate, a negative electrode terminal, and a positive electrode terminal. Each of the negative electrode terminal and the positive electrode terminal includes a rivet terminal electrically connecting the respective terminal plate and an electrode assembly. The bus bars are electrically connected to the terminal plates, each of the terminal plates has a guide line on a plate surface thereof and passing through a center of the rivet terminal.

One side of at least one of the bus bars may have a cutout portion through which the guide line is exposed.

The guide line may be parallel to a length direction of the cap assembly.

The guide line may be perpendicular to a length direction of the cap assembly.

The guide line may include: a first guide line parallel to a length direction of the cap assembly; and a second guide line perpendicular to the length direction of the cap assembly.

The guide line may further include a plurality of third guide lines spaced apart from the first guide line and the second guide line.

The first to third guide lines may be spaced apart from each other at equal intervals.

Each of the guide lines may be formed through laser marking or mechanical marking to have a preferred depth of about 0.01 mm or less.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is an exploded perspective view illustrating a battery pack according to an embodiment of the present invention.
FIG. 2 is a perspective view illustrating a battery cell according to an embodiment of the present invention.
FIG. 3 is a plan view illustrating a cell terminal of the battery cell shown in FIG. 2.
FIG. 4 is a plan view illustrating a welding state between the cell terminal shown in FIG. 3 and a bus bar.
FIG. 5 is a cross-sectional view illustrating the welding state between the cell terminal and the bus bar shown in FIG. 4.
FIG. 6 is a plan view illustrating a cell terminal according to another embodiment of the present invention.
FIG. 7 is a plan view illustrating a cell terminal according to another embodiment of the present invention.

### DETAILED DESCRIPTION

Embodiments of the present invention are provided to more completely describe the present invention to those having ordinary skill in the art. The following embodiments may be modified into various different forms, and the scope of the present invention is not limited to the following embodiments. Rather, the embodiments are provided so that the present disclosure will be thorough and complete and will convey the aspects and features of the present invention to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of' and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a battery pack, according to an embodiment of the present invention, will be described in detail with reference to the accompanying drawings.

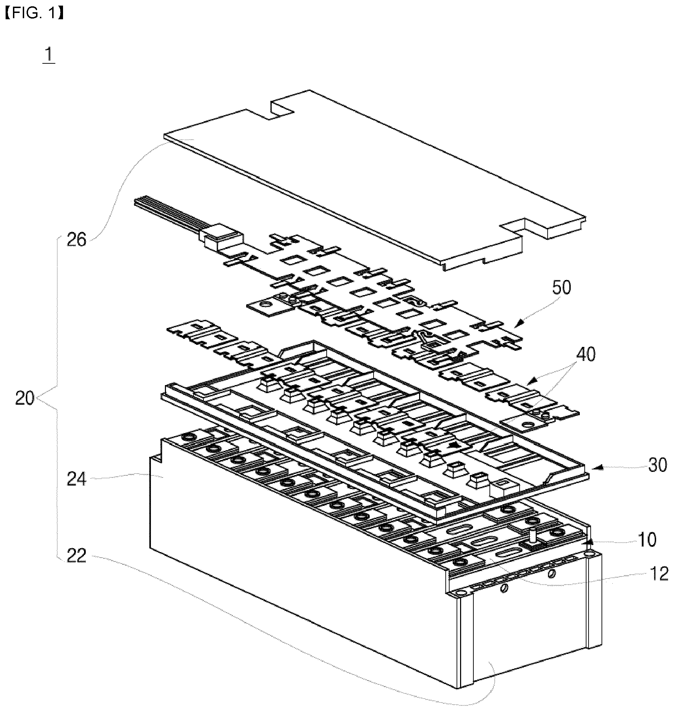

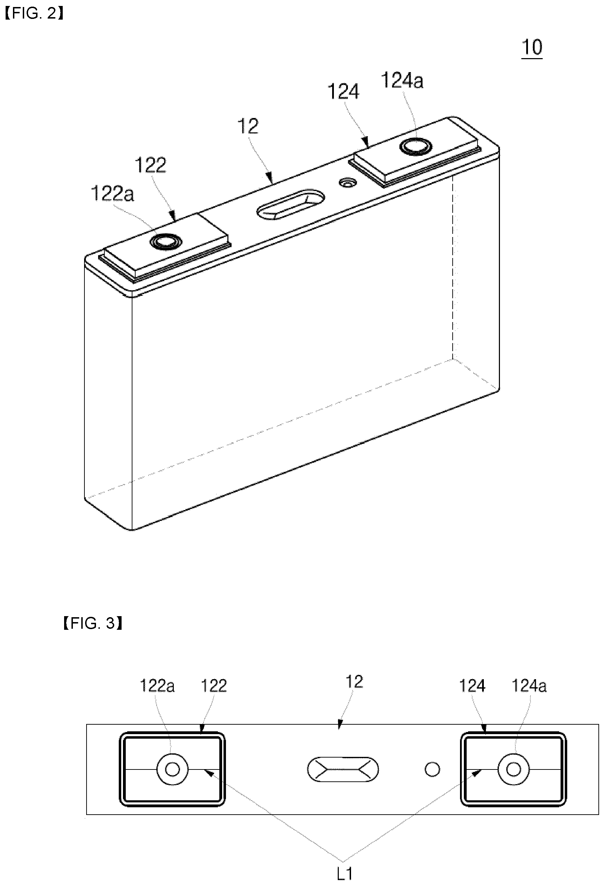

FIG. 1 is an exploded perspective view illustrating a battery pack according to an embodiment of the present invention, and FIG. 2 is a perspective view illustrating a battery cell according to one embodiment of the present invention.

As shown in FIG. 1, a battery pack 1, according to an embodiment of the present invention, may include a plurality of battery cells 10, a cell frame 20 for arranging and supporting the battery cells 10, a plurality of bus bars 40 electrically connecting the battery cells 10, and a bus bar holder 30 for supporting the bus bars 40. In addition, the battery pack 1 may further include a hybrid circuit board 50 on which various circuits and components are mounted. One or more of the bus bars 40 may be electrically connected to the circuit board 50, and the circuit board 50 may be electrically connected to the outside of the battery pack 1 through a separate connector. The battery pack 1 may be referred to as a battery module.

The battery cell 10 may have a rectangular parallelepiped shape, and the plurality of battery cells 10 may be arranged in a line in a certain direction (e.g., in a stacking direction). Each of the battery cells 10 may be arranged such that relatively wide plate (or flat) surfaces face each other. The cell frame 20 is provided to arrange the battery cells 10. Each battery cell 10 may include a case having a rectangular parallelepiped shape, an electrode assembly accommodated inside the case together with an electrolyte, and a cap assembly 12 for sealing the case.

The electrode assembly may be formed by sequentially winding or stacking a negative electrode plate, a separator, and a positive electrode plate. The negative electrode plate may have a negative electrode active material, such as graphite or carbon, coated or applied on a metal foil made of copper, a copper alloy, nickel, or a nickel alloy. The positive electrode plate may have an active material, such as a transition metal oxide, coated or applied on a metal foil made of aluminum or an aluminum alloy. An uncoated portion, which is a region on which the corresponding active material is not applied, may be formed on each of the negative electrode plate and the positive electrode plate. A negative electrode tab may be connected to a negative electrode uncoated portion, and a positive electrode tab may be connected to a positive electrode uncoated portion. The negative electrode tab and the positive electrode tab, connected in this way, may be respectively electrically connected to a negative electrode terminal and a positive electrode terminal formed in the cap assembly 12. The negative electrode terminal and the positive electrode terminal, formed in the cap assembly 12, are electrically connected to the bus bars 40.

The cell frame 20 may include a pair of end plates 22 in contact with the battery cells 10 at both (e.g., opposite) end portions along the arrangement direction of the battery cells 10, a pair of side plates 24 orthogonally coupled to (e.g., extending between and coupling) the end plates 22, and a top plate 26 coupled to an upper portion of the hybrid circuit board 50. The cell frame 20 may also include a bottom plate below the battery cells 10 to support the battery cells 10 from below. In FIG. 1, the end plates 22 support the battery cells 10 at front and rear sides, the side plates 24 support the battery cells 10 at left and right sides, and the top plate 26 supports the battery cells 10 at an upper side. The end plate 22, the side plate 24, the top plate 26, and the bottom plate are coupled to each other to form an approximately rectangular parallelepiped shape, and the battery cell 10, the bus bar holder 30, the bus bar 40, and the circuit board 50 are accommodated therein.

In FIG. 1, the bus bar holder 30 may be seated on the cap assemblies 12. The bus bar holder 30 may be made of an approximately rectangular plate material and may have a plurality of through-holes (e.g., openings) through which the positive electrode terminals and the negative electrode terminals of the cap assemblies 12 are exposed. The bus bar holder 30 may be made of an insulating material. When the positive electrode terminals and the negative electrode terminals are exposed through the through-holes formed in the bus bar holder 30, the bus bars 40 are electrically connected to the exposed positive and negative electrode terminals.

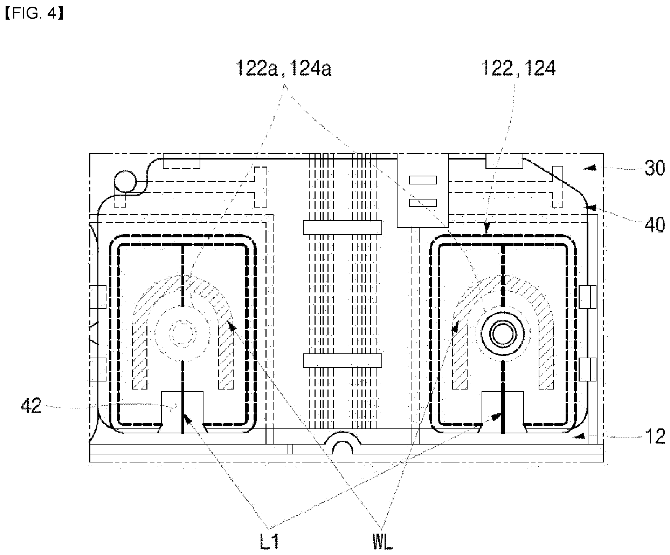

The bus bars 40 may electrically connect the positive electrode terminal and the negative electrode terminal of different ones of the battery cells 10. The bus bars 40 may connect the plurality of battery cells 10 in series and/or in parallel. To this end, the plurality of bus bars 40 may be provided. In some cases, the bus bar 40 may electrically connect the battery cells 10 that are not adjacent to each other from among the battery cells 10 arranged in a line. In other cases, the bus bar 40 may electrically connect a positive electrode terminal of one battery cell 10 and a positive electrode terminal or a negative electrode terminal of another battery cell 10. In addition, the bus bar 40 may also electrically connect a negative electrode terminal of one battery cell 10 and a positive electrode terminal or a negative electrode terminal of another battery cell 10. The bus bar 40 may be connected to the positive electrode terminal and the negative electrode terminal by laser welding. The bus bar 40 may be insulated from regions other than the positive electrode terminal and the negative electrode terminal by the bus bar holder 30. The circuit board 50 is disposed between the bus bars 40 and the top plate 26. In addition, a portion of the bus bars 40 may be cut to a certain size such that a probe for measuring low resistance may contact a terminal. The cut portion is defined as a cutout portion 42 and is shown in detail in FIG. 4.

The circuit board 50 may be a printed circuit board (PCB) on which circuits are mounted and may be a rigid board or a combination of a rigid board and a flexible board. Various components for measuring state information of the battery cells 10, such as voltage and/or temperature of the battery cells 10, and various components or circuits for controlling and/or managing the battery cells 10 may be mounted on the circuit board 50.

Hereinafter, a terminal structure of the above-described battery cells will be described in more detail.

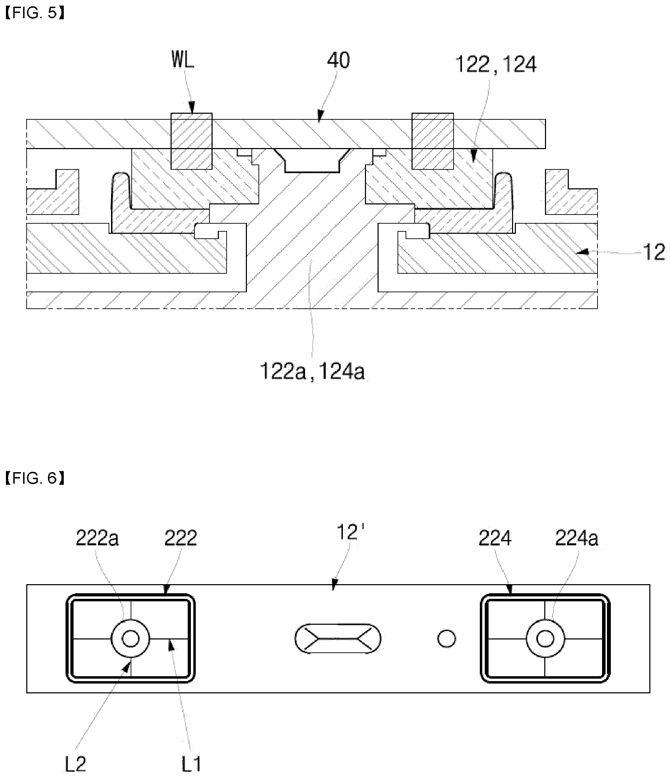

FIG. 3 is a plan view illustrating the cell terminals of the battery cell 10 shown in FIG. 2. FIG. 4 is a plan view illustrating a welding state between the cell terminals shown in FIG. 3 and the bus bar. FIG. 5 is a side cross-sectional view illustrating the welding state between the cell terminals and the bus bar shown in FIG. 4.

As shown in FIGS. 3 to 5, each battery cell 10 may include a negative electrode terminal and a positive electrode terminal. The negative electrode terminal and the positive electrode terminal may include terminal plates 122 and 124 and rivet terminals 122a and 124a, respectively. Each of the terminal plates 122 and 124 have a hollow portion (e.g., an opening) therein, and the rivet terminals 122a and 124a may be mechanically coupled to the hollow portions. Each rivet terminal 122a or 124a may electrically connect the electrode assembly in the battery cell 10 and the terminal plate 122 or 124.

In addition, as shown in FIG. 3, first guide lines L1 indicating a center on (or across) a surface (e.g., an upper surface in FIG. 2 ) exposed to the outside of the battery cell 10 may be formed on the terminal plates 122 and 124. For example, the first guide lines L1 may be formed to cross centers of the terminal plates 122 and 124 in a direction parallel to a length direction of the battery cell 10. In other words, the first guide line L1 may be formed in a direction perpendicular to a width direction (e.g., a short side) of the battery cell 10 or the cap assembly 12. The first guide lines L1 are formed to cross centers of the terminal plates 122 and 124 and the rivet terminals 122a and 124a. For example, in FIG. 3, the first guide lines L1 may be formed across centers of the terminal plates 122 and 124 and the rivet terminals 122a and 124a in a horizontal direction. For example, the first guide lines L1 may be formed on surfaces of the terminal plates 122 and 124 through laser marking or mechanical marking. Also, for example, the first guide line L1 may be formed to have a depth of about 0.01 mm or less. The first guide line L1 is exposed through the cutout portion 42 formed in the bus bar 40 (see, e.g., FIG. 4). Because the first guide line L1 is relatively very shallow as described above, the first guide line L1 do not affect the stiffness or durability of the terminal plates 122 and 124.

Referring to FIGS. 4 and 5, when the bus bar 40 and the terminal plates 122 and 124 are laser-welded, a welding line WL is formed around (e.g., is formed to be offset from or to not overlap) the rivet terminals 122a and 124a. To this end, positions of the rivet terminals 122a and 124a should be identified during the welding process. However, because the first guide lines L1 pass through the centers of the terminal plates 122 and 124 and the rivet terminals 122a and 124a, whether or not the first guide line L1 is positioned at a center or in what direction the first guide line L1 is biased can be determined by viewing the first guide line L1 through the cutout portion 42 of the bus bar 40 (see, e.g., FIG. 4). Therefore, center positions of the rivet terminals 122a and 124a can be determined, and thus, the welding line WL can be adjusted to avoid the rivet terminals 122a and 124a.

The above-describe terminal plate may have an additional guide line.

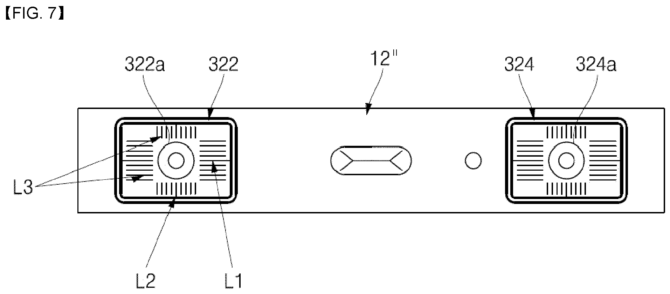

FIGS. 6 and 7 are plan views illustrating a cell terminal according to other embodiments of the present invention.

As shown in FIG. 6, second guide lines L2 may be formed on terminal plates 222 and 224 in a direction perpendicular to the first guide lines L1. That is, the second guide line L2 may be formed in a direction corresponding to the width direction (e.g., the short side) of the battery cell 10. In this embodiment, the second guide lines L2 may also be formed to pass through centers of the terminal plates 222 and 224 and rivet terminals 222a and 224a. That is, in FIG. 6, the second guide lines L2 may be formed to pass through centers of the terminal plates 222 and 224 and the rivet terminals 222a and 224a in a vertical direction (in the plan view of the drawing). When a cutout portion for measuring low resistance is positioned at a side surface (e.g., a peripheral edge) of the bus bar 40 according to a shape of the bus bar 40, the centers of the rivet terminals 222a and 224a may be further identified by using the second guide lines L2.

As shown in FIG. 7, a plurality of third guide lines L3 may be formed around the first guide lines L1 and the second guide lines L2 on each of terminal plates 322 and 324. For example, the third guide lines L3 may include a plurality of guide lines disposed at equal intervals like (e.g., parallel to) the first guide lines L1 and a plurality of guide lines disposed at equal intervals like (e.g., parallel to) the second guide lines L2. For example, an interval between adjacent guide lines (e.g., adjacent parallel third guide lines L3, third guide lines L3 and the first guide line L1, and third guide lines L3 and the second guide line L2) may be about 1 mm. When the third guide lines L3 are additionally provided, centers of rivet terminals 322a and 324a can be more precisely identified as compared to an embodiment in which only the first guide line L1 and/or the second guide line L2 is/are provided.

As described above, because the guide line for identifying the center of the rivet terminal is provided on the terminal plate, the center of the rivet terminal may be easily identified. In addition, when the bus bar and the terminal plate are welded, the welding line may be formed to avoid the rivet terminal.

According to embodiments of the present invention, because a guide line for identifying a center of a rivet terminal is provided on a terminal plate of a battery cell, the center of the rivet terminal can be easily identified. In addition, when a bus bar and a terminal plate are welded together, a welding line can be formed to avoid the rivet terminal.

The foregoing embodiments are only some embodiments for carrying out the present invention, which is not limited to these embodiments. It will be understood by a person skilled in the art that various changes in form and details may be made therein without departing from the scope of the present invention as defined by the following claims and their equivalents.

## Claims

1. A battery cell (10) comprising:
an electrode assembly; and
a cap assembly (12) comprising:
a terminal plate (122, 124, 222, 224);
a negative electrode terminal; and
a positive electrode terminal, the negative electrode terminal and the positive electrode terminal respectively comprising a rivet terminal (122a, 124a, 222a, 224a) electrically connecting the terminal plate (122, 124, 222, 224) and the electrode assembly,
wherein the terminal plate (122, 124, 222, 224) has a guide line (L1, L2, L3) on a plate surface thereof and passing through a center of the rivet terminal (122a, 124a, 222a, 224a).

2. The battery cell (10) of claim 1, wherein the guide line (L1, L2, L3) is parallel to a length direction of the cap assembly (12).

3. The battery cell (10) of claim 1, wherein the guide line (L1, L2, L3) is perpendicular to a length direction of the cap assembly (12).

4. The battery cell (10) of claim 1, wherein the guide line (L1, L2, L3) comprises:
a first guide line (L1) parallel to a length direction of the cap assembly (12); and
a second guide line (L2) perpendicular to the length direction of the cap assembly (12).

5. The battery cell (10) of claim 4, wherein the guide line (L1, L2, L3) further comprises a plurality of third guide lines (L3) spaced apart from the first guide line (L1) and the second guide line (L2).

6. The battery cell (10) of claim 5, wherein the first to third guide lines (L1, L2, L3) are spaced apart from each other at equal intervals.

7. The battery cell (10) of any one of the preceding claims, wherein the guide line (L1, L2, L3) is formed through laser marking or mechanical marking to have a depth of about 0.01 mm or less.

8. A battery pack (1) comprising:
a plurality of battery cells (10), each of the battery cells (10) comprising:
a cap assembly (12) comprising a terminal plate (122, 124, 222, 224), a negative electrode terminal, and a positive electrode terminal, each of the negative electrode terminal and the positive electrode terminal comprising a rivet terminal (122a, 124a, 222a, 224a) electrically connecting the respective terminal plate (122, 124, 222, 224) and an electrode assembly;
a plurality of bus bars (40) electrically connected to the terminal plates (122, 124, 222, 224); and
a cell frame (20) supporting the battery cells (10),
wherein each of the terminal plates (122, 124, 222, 224) has a guide line (L1, L2, L3) on a plate surface thereof and passing through a center of the rivet terminal (122a, 124a, 222a, 224a).

9. The battery pack (1) of claim 8, wherein one side of at least one of the bus bars (40) has a cutout portion (42) through which the guide line (L1, L2, L3) is exposed.

10. The battery pack (1) of claim 8 or 9, wherein the guide line (L1, L2, L3) is parallel to a length direction of the cap assembly (12).

11. The battery pack (1) of claim 8 or 9, wherein the guide line (L1, L2, L3) is perpendicular to a length direction of the cap assembly (12).

12. The battery pack (1) of claim 8 or 9, wherein the guide line (L1, L2, L3) comprises:
a first guide line (L1) parallel to a length direction of the cap assembly (12); and
a second guide line (L2) perpendicular to the length direction of the cap assembly (12).

13. The battery pack (1) of claim 12, wherein the guide line (L1, L2, L3) further comprises a plurality of third guide lines (L3) spaced apart from the first guide line (L1) and the second guide line (L2).

14. The battery pack (1) of claim 13, wherein the first to third guide lines (L1, L2, L3) are spaced apart from each other at equal intervals.

15. The battery pack (1) of any one of claims 8 to 14, wherein each of the guide lines (L1, L2, L3) is formed through laser marking or mechanical marking to have a depth of about 0.01 mm or less.
